# EUROPÄISCHE PATENTANMELDUNG

(11) **EP 3 575 261 A2**
(43) Veröffentlichungstag der Anmeldung: **04.12.2019**
(21) Anmeldenummer: 19175864.8
(22) Anmeldetag: 22.05.2019
(51) Int. Cl.: B68C 1/00, B68C 3/00

(54) **AUFSTIEGHILFE FÜR DEN REITSPORT**

(30) Priorität: 29.05.2018 DE 102018112778
(71) Anmelder: Wilhelm Haas Bürstenfabrik Inh. Stephan Vogel e.K., 78166 Donaueschingen (DE)
(72) Erfinder: Vogel, Stephan, 78166 Donaueschingen (DE)
(74) Vertreter: Westphal, Mussgnug & Partner Patentanwälte mbB

(57) **Zusammenfassung**

Die Erfindung betrifft eine Aufstieghilfe für den Reitsport, wobei die Aufstieghilfe als Endlosschnur ausgebildet ist. Weiterhin betrifft die Erfindung die Verwendung einer Endlosschnur im Reitsport.

## Beschreibung

Die Erfindung betrifft eine Aufstieghilfe für den Reitsport.

Um das Aufsteigen auf ein Pferd zu vereinfachen, sind bereits verschiedene Aufstieghilfen bekannt. Beispielsweise sind Aufstieghilfen in Form von Trittstufen oder Hockern bekannt, welche neben das Pferd gestellt werden, so dass ein Reiter auf diese steigen kann und von dort einfacher auf das Pferd aufsteigen kann. Nachteilig dabei ist jedoch, dass eine derartige Aufstieghilfe nach dem Aufsteigen nicht vom Reiter selbst weggeräumt werden kann.

Die DE 20 2010 003 102 U1 offenbart eine mobile Aufstieghilfe für den Reitsport mit einem Seil oder Riemen, an welchem eine Fußaufnahme in Form eines Balkens sowie eine Einhängvorrichtung in Form eines Hakens befestigt ist. Die Aufstieghilfe kann in den Steigbügelriemen eingehängt werden, um das Aufsteigen auf das Pferd zu erleichtern und nach dem Aufsitzen vom Reiter selbst entfernt und beispielsweise in der Tasche mitgeführt werden. Dabei weist diese mobile Aufstieghilfe jedoch den Nachteil auf, dass sie auf Grund des Fußteils und des Hakens vergleichsweise sperrig ausgebildet ist. Das Mitführen beim Reiten kann daher lästig oder unangenehm sein.

Die Aufgabe der Erfindung besteht daher darin, eine Aufstieghilfe für den Reitsport weiter zu verbessern, insbesondere dahingehend, dass sie einfacher mitzuführen ist. Ein weiterer Aspekt der Erfindung liegt darin, eine Vorrichtung für den Reitsport bereit zu stellen, welche verschiedene Tätigkeiten im Zusammenhang mit dem Reitsport, wie insbesondere das Aufsteigen auf das Pferd, weiter vereinfachen kann.

Die Aufgabe der Erfindung wird gelöst durch eine Aufstieghilfe für den Reitsport mit den Merkmalen des Patentanspruchs 1.

Vorteilhafte Ausgestaltungen und Weiterbildungen der Erfindung sind in den abhängigen Ansprüchen angegeben.

Die erfindungsgemäße Aufstieghilfe für den Reitsport zeichnet sich dadurch aus, dass sie als Endlosschnur ausgebildet ist. Unter einer Endlosschnur ist dabei eine in sich geschlossene Schnur zu verstehen, oder mit anderen Worten eine Schnur, deren beide Enden miteinander verbunden sind, insbesondere stirnseitig und unlösbar.

Die Aufstieghilfe weist somit keinerlei harte Komponenten wie einen Befestigungshaken oder ein Trittbrett auf, welche sperrig sind. Die erfindungsgemäße Aufstieghilfe besteht lediglich aus der Endlosschnur, welche quer über ein Trittfläche eines Steigbügels gelegt werden kann, derart, dass auf beiden Seiten der Trittfläche des Steigbügels durch die herabhängenden Enden der Endlosschnur zwei Schlaufen gebildet werden, in welche der Fuß des Reiters zum Aufsteigen gestellt werden kann. Die Endlosschnur kann nach dem Aufsitzen problemlos in der Jacken- oder Hosentasche mitgeführt werden, da sie zu einem kleinen Knäuel zusammengerollt werden kann und keinerlei harte, sperrige Komponenten aufweist. Die Endlosschnur weist dabei den Vorteil auf, dass sie keine Verbindungsstelle aufweist, bei welcher die Gefahr besteht, dass diese sich lösen könnte.

Vorteilhafterweise weist die Endlosschnur eine Länge zwischen 40 cm und 100 cm, vorzugsweise eine Länge von 50 cm bis 80 cm, besonders bevorzugt eine Länge von 60 cm, auf. Als Länge der Endlosschnur wird dabei die Länge bezeichnet, die sich ergibt, wenn die Endlosschnur an einem Punkt gehalten und herunterhängen gelassen wird, die Schnur selbst somit also doppelt liegt. Anders ausgedrückt ist die Länge der Endlosschnur gleich der halben Länge der die Endlosschnur bildenden Schnur. Eine Länge in den zuvor angegebenen Bereichen erfüllt die Anforderungen an die verschiedenen Verwendungsmöglichkeiten besonders vorteilhaft. Insbesondere wird dadurch eine Aufstieghilfe bereitgestellt, die einen Aufstieg in einer komfortablen Höhe für den aufsteigenden Reiter ermöglicht.

Vorteilhafterweise ist die Endlosschnur ein Polyamidseil, welches eine besondere Stabilität aufweisen kann.

Um eine besonders hohe Stabilität zu erreichen, kann die Endlosschnur auch ein Polyamid-ummanteltes Stahlseil sein.

Ein Grundgedanke der Erfindung liegt in der Verwendung einer Endlosschnur, insbesondere in der Verwendung einer erfindungsgemäßen Endlosschnur, im Reitsport. Dabei ergeben sich verschiedenartigste Verwendungsmöglichkeiten.

Eine bevorzugte Verwendung einer Endlosschnur besteht in der Verwendung einer Endlosschnur im Reitsport als Aufstieghilfe, wobei die Endlosschnur quer über eine Trittfläche eines Steigbügels gelegt wird und zum Aufsteigen ein Fuß in beiderseits des Steigbügels herabhängende durch die Endlosschnur gebildete Schlaufen gestellt wird.

Die Endlosschnur kann problemlos zusammengelegt werden und passt somit in jede Hand oder Tasche. Sie kann an der Hose festgebunden werden oder wie ein Armband um das Handgelenk getragen werden und schränkt den Träger dadurch nicht ein.

Eine alternative bevorzugte Verwendung einer Endlosschnur im Reitsport liegt in einer Aufhängung für einen Salzleckstein. Der Salzleckstein kann mit einer aus der Endlosschnur geknoteten Schlaufe gehalten werden und mittels der Endlosschnur aufgehängt werden.

Die Endlosschnur kann auch zum Transport von Zaun- oder Springstangen sowie Heuballen verwendet werden. Hierbei kann je nach Umfang des zu tragenden Gegenstandes eine oder mehrere Endlosschnüre um den jeweiligen Gegenstand gelegt oder geknotet und an der sich oben bildenden Schlaufe getragen werden.

Eine alternative Verwendung einer Endlosschnur im Reitsport liegt in einem Notgebiss für ein Pferd, wobei jeweils ein Karabinerhaken an jedem Ende der in sich verdrillten Endlosschnur befestigt wird. Hierbei ist jedoch zu beachten, dass dies keine Alternative für ein richtiges Gebiss darstellt, sondern nur im Notfall in dieser Form gebraucht werden sollte.

Eine weitere alternative Verwendung einer Endlosschnur im Reitsport sieht vor, dass die Endlosschnur als Hebehilfe zum Aufheben eines Pferdehufs verwendet wird. Dazu wird die Endlosschnur um die Hufkrone des Pferds gelegt und der Huf an den zwei seitlich liegenden Schlaufen der Endlosschnur angehoben, was besonders rückenschonend sein kann.

Eine weitere alternative Verwendung einer Endlosschnur im Reitsport sieht vor, die Endlosschnur als Balancezügel oder Einsteigerzügel zu verwenden. Hierbei wird die Endlosschnur um den Hals des Pferdes gelegt und oberhalb des Widerrists oder des Halses verknotet. Die entstandene Schlaufe kann vom Reiter festgehalten werden. Der Balancezügel hilft Pferden, die zum Stolpern neigen oder schwer aufzurichten sind. Außerdem kann es plötzliches Losrennen vermeiden und hilft Pferden, die sich wegen Balanceschwierigkeiten in den Zügel legen. Die Verwendung der Endlosschnur als Einsteigerzügel hilft dem Reiter, den Sitz zu verbessern, da die Bewegungsfreiheit der langen Zügel fehlt. Außerdem wird ein Herumreißen der Zügel vermieden, welches oft ein Anfängerfehler ist, da sich Anfänger oft am Zügel festhalten. Das Pferdemaul kann somit durch den Einsteigerzügel entlastet werden.

Eine alternative bevorzugte Verwendung liegt in der Verwendung der Endlosschnur als Schweißmesser. Dazu wird die Endlosschnur zusammengelegt oder verdrillt und anschließend mit etwas Druck über das nasse Pferdefell gezogen.

Eine weitere alternative Verwendung liegt in der Nutzung der Endlosschnur als Schweifband oder Verlesehilfe. Dazu wird ein Teil des Schweifes mit der Endlosschnur zusammengebunden und der offene Teil vom Reiter verlesen.

Eine weitere bevorzugte Verwendung der Endlosschnur kann das Fixieren der Steigbügel am Sattel sein. Die Steigbügel werden mit der Endlosschnur über dem Sattel zusammengebunden und sind somit aus dem Weg. Das kann bei der Sattellagerung, aber auch beim Longieren oder bei der Bodenarbeit mit Sattel hilfreich sein.

Eine weitere alternative Verwendung liegt in der Verwendung der Endlosschnur als Maria-Hilf-Riemen oder Festhalteriemen. Dazu wird die Endlosschnur an den vorne am Sattel befindlichen Ösen angebracht und kann von unsicheren Reitern als zusätzliche Sicherheit benutzt werden.

Eine bevorzugte Verwendung der Endlosschnur liegt darin, die Endlosschnur als Zügelfixierung zu benutzen. Hierbei wird die Endlosschnur an den vorne am Sattel befindlichen Ösen befestigt und die Zügel werden durch die gebildete Schlaufe gelegt, wodurch sie aus dem Weg sind, so dass keine Gefahr besteht, dass das Pferd darauf treten und dadurch stolpern könnte.

Eine weitere alternative Verwendung liegt darin, die Endlosschnur als Halsring oder Reitband zu benutzen. Hierbei wird die Endlosschnur um den Hals des Pferdes gelegt. Bei der Bodenarbeit wird die Endlosschnur statt eines Halfters benutzt und die Longe wird daran befestigt. Der Reiter muss sich dadurch vor allem auf seine Körpersprache beziehen, da die direkte Verbindung durch Halfter und Longe fehlt. Beim Reiten wird die Endlosschnur statt einer Trense und Zügel verwendet. Hierbei muss sich der Reiter sehr auf die körperlichen Signale, die er an das Pferd schickt, konzentrieren, da hier nur mit Gewichtsverlagerung und Druck durch die Beine Signale weitergeleitet werden können.

Eine weitere alternative Verwendung der Endlosschnur besteht in der Verwendung als Führhilfe. Dazu wird die Endlosschnur um den Hals des Pferdes gelegt. Der Reiter fasst die Endlosschnur nahe am Pferd, sodass sich die Endlosschnur etwas enger an den Pferdehals anlegt. Nun kann das Pferd herumgeführt werden.

Eine bevorzugte alternative Verwendung liegt in der Benutzung der Endlosschnur als Nothalfter. Hierbei werden zwei Endlosschnüre um den Kopf des Pferdes gelegt, eine um die Nase des Pferdes und eine weitere um das Genick. Diese werden dann unter dem Pferdekopf ineinander verdrillt und der Führstrick kann an der entstandenen Schlaufe befestigt werden.

Die Erfindung wird anhand der folgenden Figuren ausführlich erläutert. Es zeigen
- Figur 1: ein Ausführungsbeispiel einer erfindungsgemäßen Aufstieghilfe,
- Figur 2a: die Aufbewahrung der Endlosschnur in der Hand,
- Figur 2b: die Aufbewahrung der Endlosschnur an der Hose angebunden,
- Figur 2c: die Aufbewahrung der Endlosschnur am Arm,
- Figur 3a: die Verwendung einer Endlosschnur als Aufhängung für einen Salzleckstein,
- Figur 3b: die Verwendung einer Endlosschnur als Tragehilfe für Zaun- oder Springstangen,
- Figur 3c: die Verwendung einer Endlosschnur als Tragehilfe für Heuballen,
- Figur 4a: die Verwendung einer Endlosschnur als Notgebiss,
- Figur 4b: die Verwendung einer Endlosschnur als Führhilfe,
- Figur 5: die Verwendung einer Endlosschnur als Hebehilfe zum Aufheben eines Pferdehufs,
- Figur 6: die Verwendung einer Endlosschnur als Balancezügel oder Einsteigerzügel,
- Figur 7: die Verwendung einer Endlosschnur als Schweißmesser,
- Figur 8: die Verwendung einer Endlosschnur als Verlesehilfe,
- Figur 9: die Verwendung einer Endlosschnur als Steigbügelfixierung,
- Figur 10: die Verwendung einer Endlosschnur als MariaHilf-Riemen oder Festhalteriemen,
- Figur 11: die Verwendung einer Endlosschnur als Zügelfixierung,
- Figur 12: die Verwendung einer Endlosschnur als Halsring oder Reitring,
- Figur 13: die Verwendung einer Endlosschnur als Führhilfe und
- Figur 14: die Verwendung einer Endlosschnur als Nothalfter.

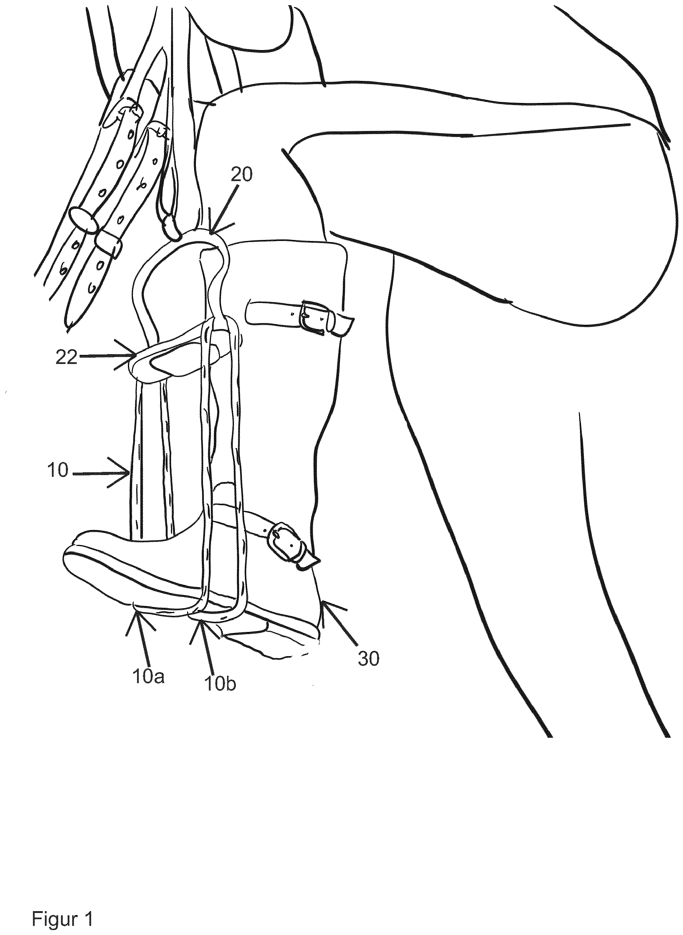

Figur 1 zeigt ein Ausführungsbeispiel einer erfindungsgemäßen Aufstieghilfe, welche als Endlosschnur 10 ausgebildet ist. Die Endlosschnur 10 kann ein Polyamidseil sein. Weiterhin kann die Endlosschnur eine Länge zwischen 40 cm und 100 cm, vorzugsweise eine Länge von 50 cm bis 80 cm, beispielsweise eine Länge von etwa 60 cm, aufweisen. Die Endlosschnur 10 kann als Aufstieghilfe im Reitsport derart verwendet werden, dass sie quer über eine Trittfläche 22 eines Steigbügels 20 gelegt wird, so dass beiderseits des Steigbügels 20 jeweils eine Schlaufe 10a, 10b durch die Endlosschnur 10 gebildet wird, in welche ein Fuß 30 gestellt werden kann. Nach dem Aufsitzen kann der Reiter die Endlosschnur 10 vom Steigbügel 20 nehmen und in seiner Tasche verstauen.

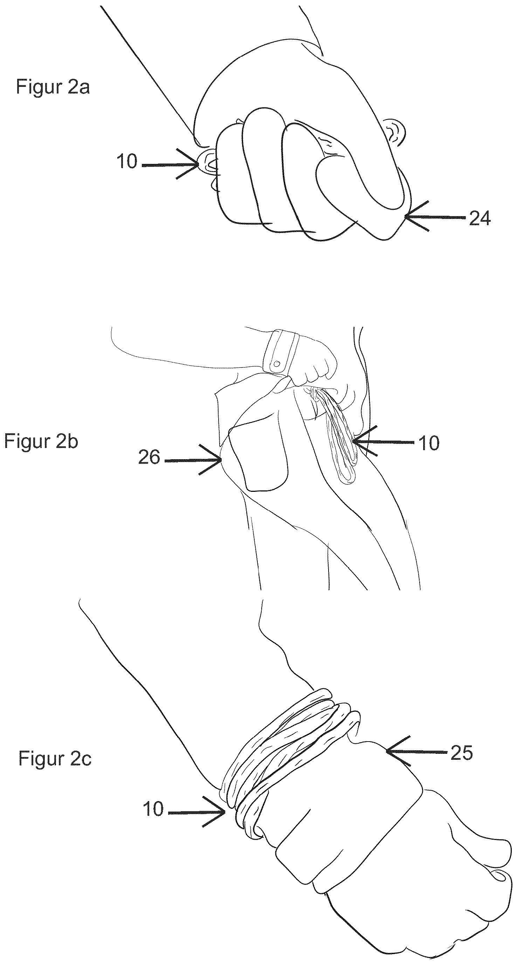

Figur 2a zeigt, dass die Endlosschnur 10 in zusammengefaltetem Zustand problemlos in eine Hand 24 eines Benutzers passt. Die Endlosschnur 10 kann zur Aufbewahrung auch an eine Hose 26 eines Benutzers angeknotet werden (vgl. Figur 2b) oder um ein Handgelenk 25 nach Art eines Armbands gewickelt werden (vgl. Figur 2c)

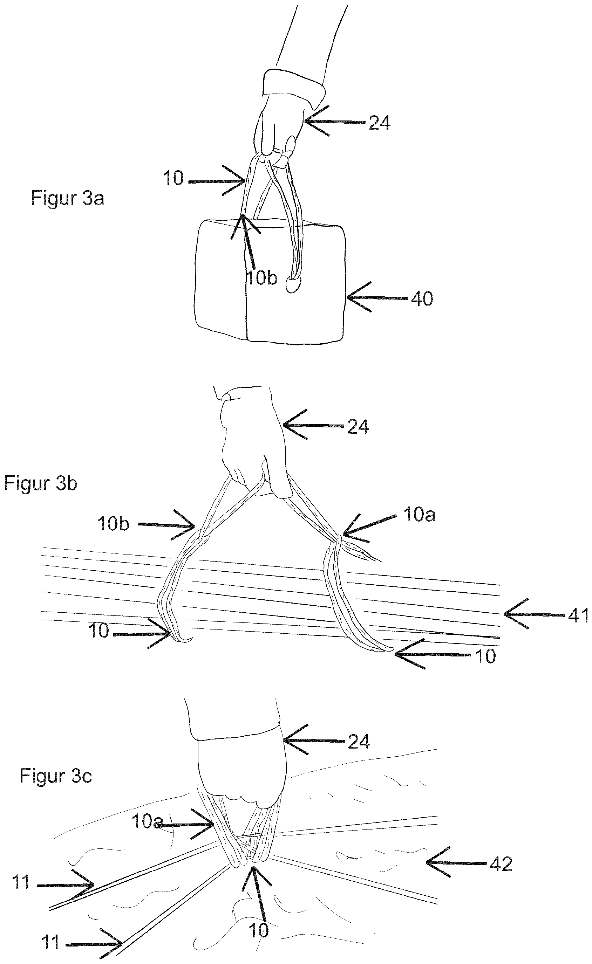

Figur 3a zeigt eine weitere Anwendung der Endlosschnur 10 im Reitsport als Aufhängung für einen Salzleckstein 40. Der Salzleckstein 40 wird dazu in eine durch die Endlosschnur 10 gebildete Schlaufe 10c gehängt und mittels der Endlosschnur 10 selbst aufgehängt. Wird die Endlosschnur 10 als Tragehilfe für eine Zaun- oder Springstange 41 verwendet, werden zwei Endlosschnüre 10 um die Zaun- oder Springstangen 41 gebunden und an den sich oben bildenden Schlaufen 10a und 10b gehalten (vgl. Figur 3b). Zur Verwendung als Tragehilfe für einen Heuballen 42 wird die Endlosschnur 10 durch das am Heuballen 42 befestigte Bindegarn 11 gezogen und an der oben gebildeten Schlaufe 10a gehalten (vgl. Figur 3c).

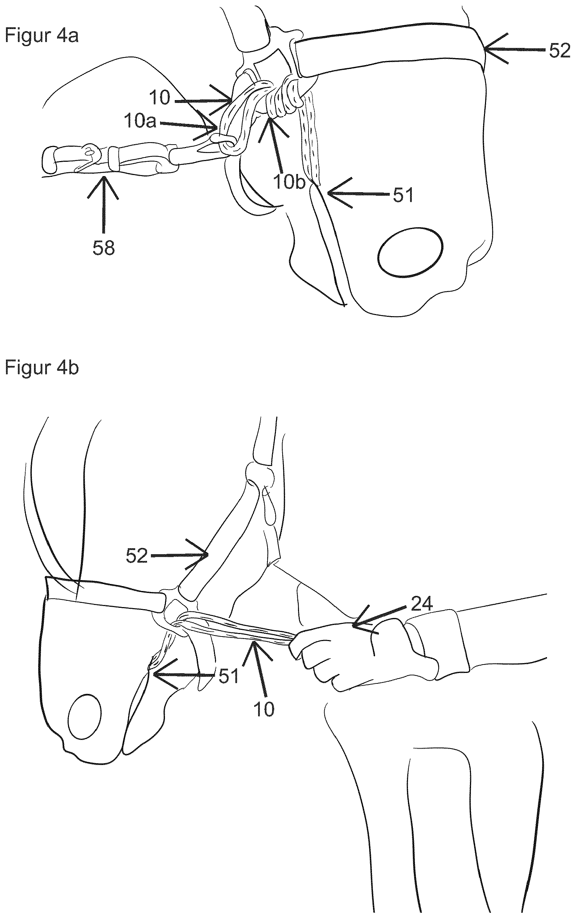

Figur 4a zeigt die Verwendung der Endlosschnur 10 als Notgebiss. Hierzu wird die Endlosschnur 10 verdrillt und um ein Halfter oder eine Trense 52 gewickelt. Nun kann sie wie ein normales Gebiss in ein Pferdemaul 51 eingeführt werden. Die Zügel 58 können an den sich auf beiden Seiten befindlichen Schlaufen 10a befestigt werden.

Figur 4b zeigt die Verwendung der Endlosschnur 10 als Führhilfe. Hierbei wird die Endlosschnur 10 in das Pferdemaul 51 geführt und durch das Halfter oder die Trense 52 gezogen, um als Führhilfe genutzt werden zu können.

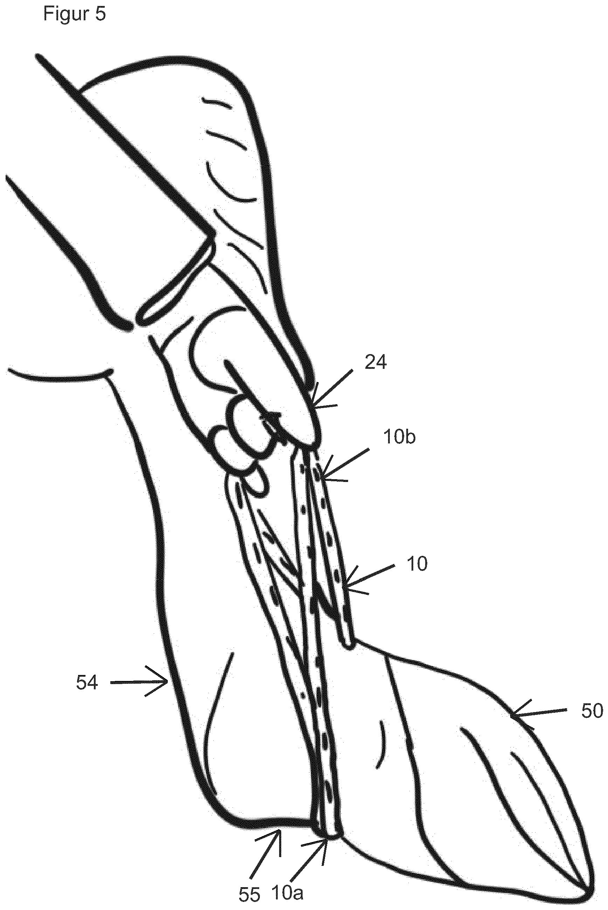

Figur 5 zeigt die Verwendung der Endlosschnur 10 als Hebehilfe zum Aufheben eines Pferdehufs 50 eines Pferdebeins 54. Die Endlosschnur wird um eine Hufkrone 55 gelegt und der Pferdehuf 50 an den beiderseits des Pferdehufs 50 gebildeten Schlaufen 10a, 10b angehoben. Ein derartiges Anheben mit Hilfe der Endlosschnur 10 ist rückenschonender als das Anheben des Pferdehufs 50 mit den Händen.

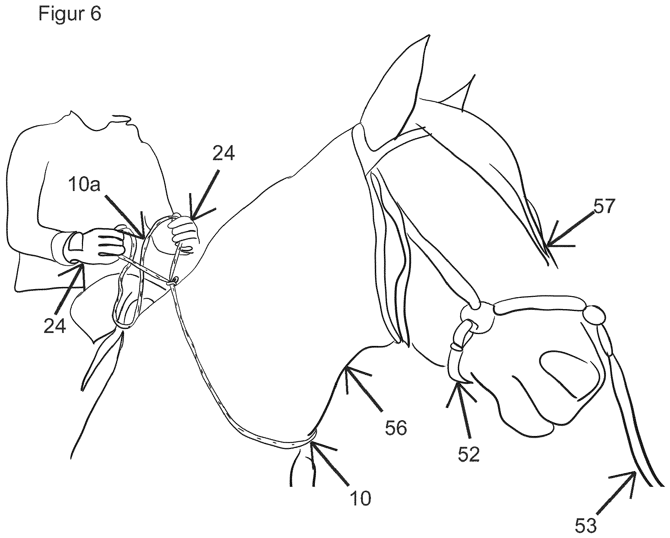

Figur 6 zeigt die Verwendung einer Endlosschnur 10 als Balancezügel oder Einsteigerzügel. Hierbei wird die Endlosschnur 10 um einen Pferdehals 56 gelegt und über diesem verknotet. Die gebildete Schlaufe 10a wird festgehalten.

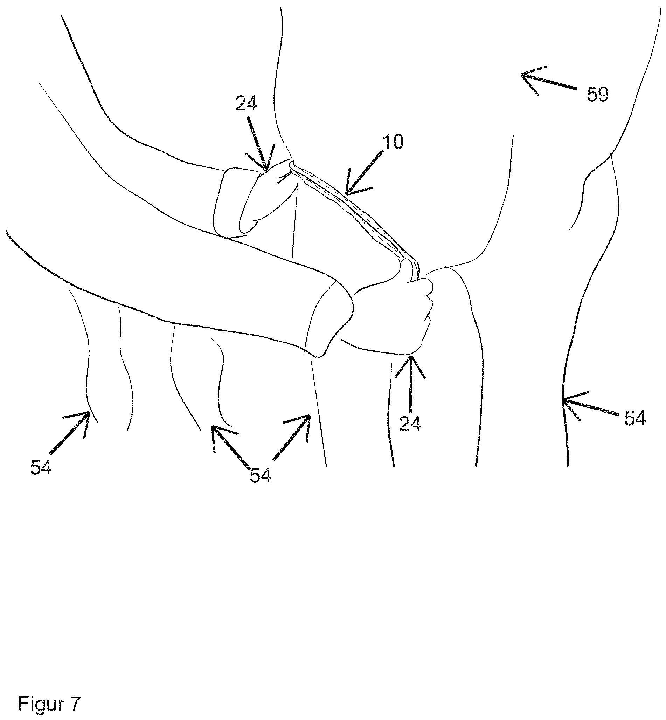

Figur 7 zeigt die Verwendung einer Endlosschnur 10 als Schweißmesser. Hierbei wird die Endlosschnur 10 zusammengelegt oder verdrillt und mit Druck über den Pferdekörper 59 gezogen, um den Schweiß oder das Wasser abzustreifen.

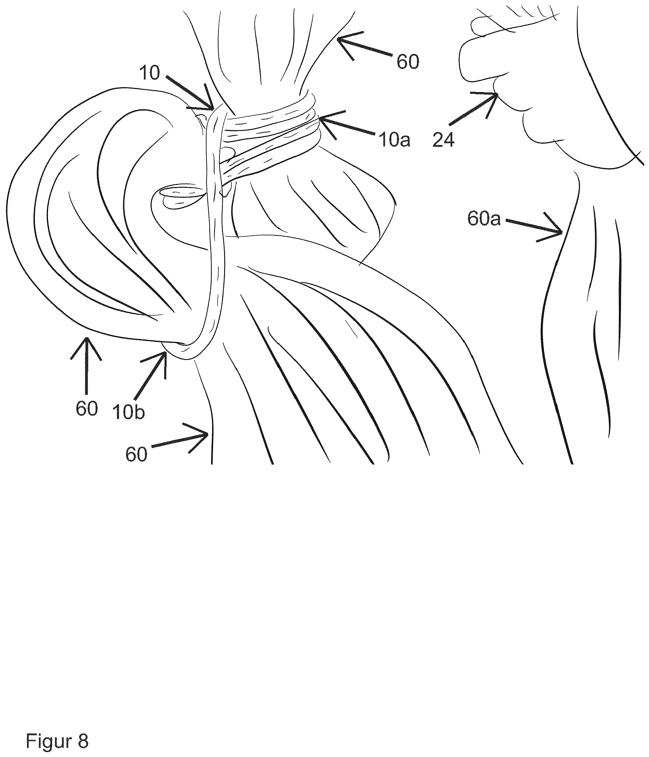

Figur 8 zeigt die Verwendung einer Endlosschnur 10 als Verlesehilfe für einen Schweif 60. Hierbei wird die Endlosschnur 10 um den Schweif 60 gewickelt, die entstandenen Schlaufen 10a und 10b halten den noch nicht verlesenen Schweif 60 fest, während der Reiter den offenen Schweif 60a verlesen kann.

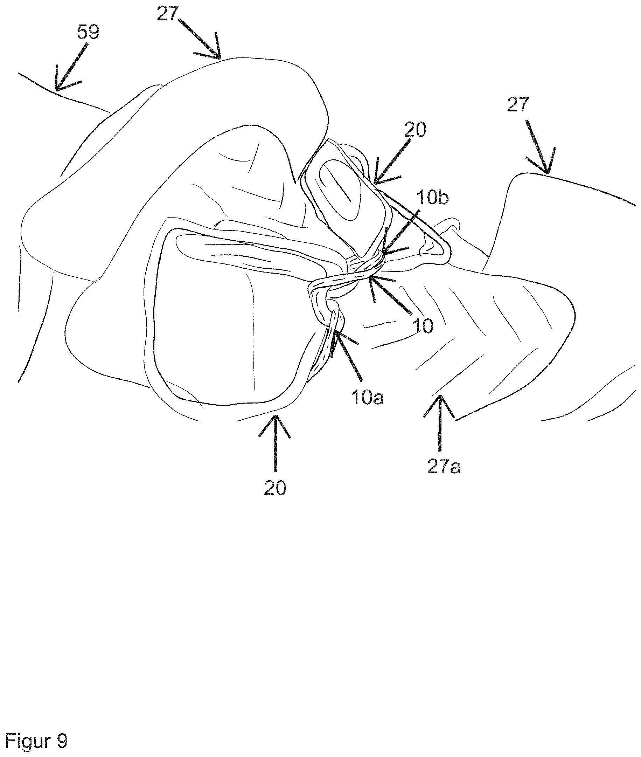

Figur 9 zeigt die Verwendung einer Endlosschnur 10 als Steigbügelfixierung. Hierbei werden die Steigbügel 20 über dem Sattel 27 auf der Sattelfläche 27a mit der Endlosschnur 10 zusammengebunden. Hierbei halten die Schlaufen 10a und 10b die jeweiligen Steigbügel 20.

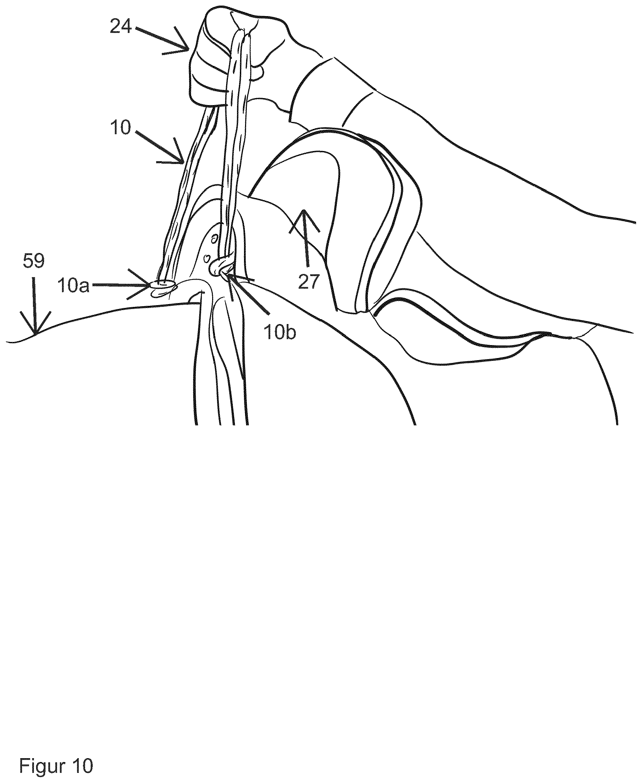

Figur 10 zeigt die Verwendung einer Endlosschnur 10 als Maria-Hilf-Riemen oder Festhalteriemen. Hierbei wird die Endlosschnur 10 an dem Sattel 27 festgebunden. Der Reiter kann sich nun im Falle eines Notfalls daran festhalten.

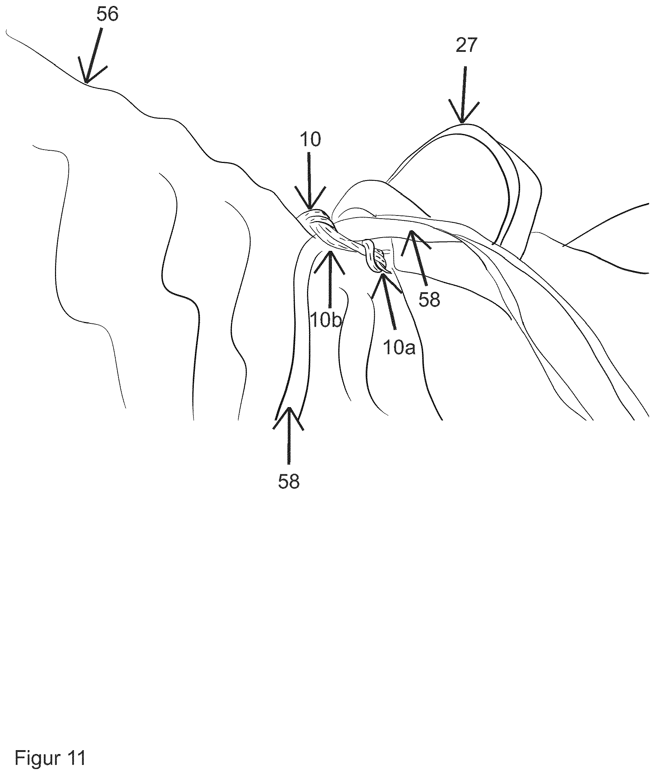

Figur 11 zeigt die Verwendung einer Endlosschnur 10 als Zügelfixierung. Hierbei wird die Endlosschnur 10 am Sattel 27 befestigt und der Zügel 58 durch die Schlaufe 10b gezogen und ist somit aus dem Weg.

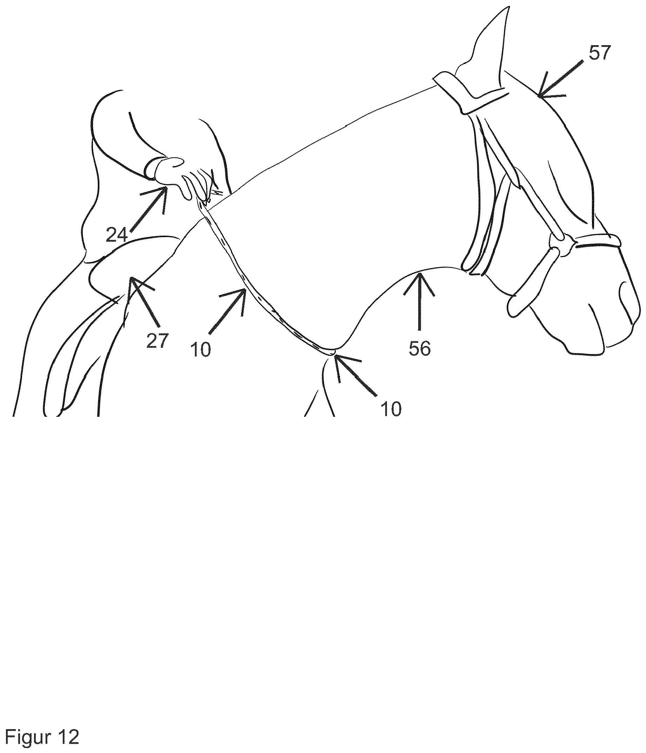

Figur 12 zeigt die Verwendung einer Endlosschnur 10 als Halsring oder Reitring. Hierbei wird die Endlosschnur 10 um den Pferdehals 56 gelegt und oberhalb dessen festgehalten.

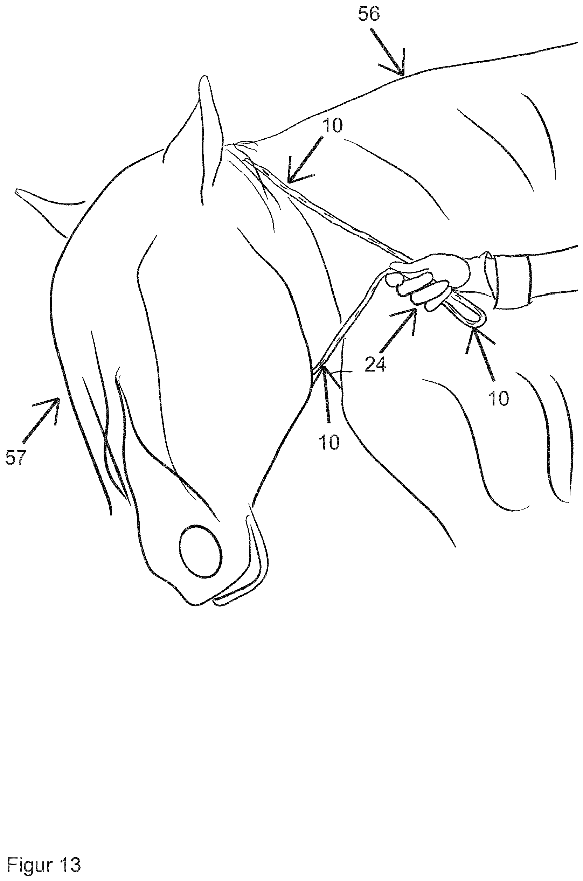

Figur 13 zeigt die Verwendung einer Endlosschnur 10 als Führhilfe. Hierbei wird die Endlosschnur 20 über den Pferdehals 56 gelegt und mit der Hand 24 eng am Pferdehals 56 gegriffen. Nun kann das Pferd geführt werden.

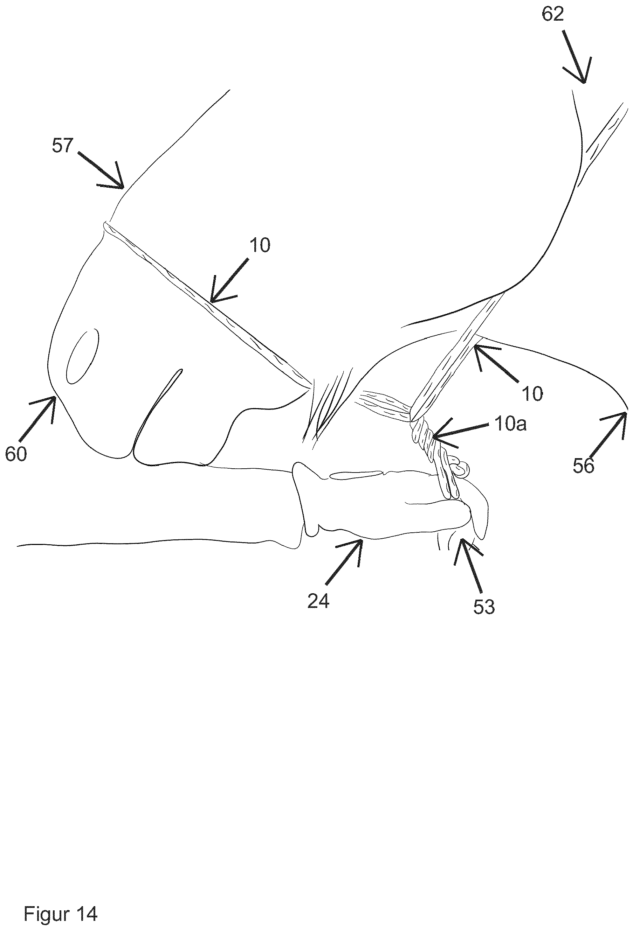

Figur 14 zeigt die Verwendung zweier Endlosschnüre 10 als Nothalfter. Eine der Endlosschnüre 10 wird um die Pferdenase 61 gelegt und die andere Endlosschnur 10 wird um den Pferdenacken 62 gelegt. Beide Endlosschnüre 10 werden unter dem Pferdekopf 57 ineinander verdrillt. An der gebildeten Schlaufe 10a kann ein Führstrick 53 befestigt werden.

### Bezugszeichenliste

- 10: Endlosschnur
- 10a: Schlaufe
- 10b: Schlaufe
- 10c: Schlaufe
- 11: Bindegarn
- 20: Steigbügel
- 22: Trittfläche
- 24: Hand
- 25: Handgelenk
- 26: Hose
- 27: Sattel
- 27a: Sattelfläche
- 30: Fuß
- 40: Salzleckstein
- 41: Zaun- oder Springstange
- 42: Heuballen
- 50: Pferdehuf
- 51: Pferdemaul
- 52: Trense
- 53: Führstrick
- 54: Pferdebein
- 55: Hufkrone
- 56: Pferdehals
- 57: Pferdekopf
- 58: Zügel
- 59: Pferdekörper
- 60: Schweif
- 60a: Offener Schweif
- 61: Pferdenase
- 62: Pferdenacken

## Patentansprüche

1. Aufstieghilfe für den Reitsport,
**dadurch gekennzeichnet, dass** die Aufstieghilfe als Endlosschnur (10) ausgebildet ist.

2. Aufstieghilfe nach Anspruch 1,
**dadurch gekennzeichnet, dass** die Endlosschnur (10) eine Länge zwischen 40 cm und 100 cm, vorzugsweise eine Länge von 50 cm bis 80 cm, besonders bevorzugt eine Länge von 60 cm, aufweist.

3. Aufstieghilfe nach einem der vorhergehenden Ansprüche,
**dadurch gekennzeichnet, dass** die Endlosschnur (10) ein Polyamid-Seil ist.

4. Aufstieghilfe nach einem der vorhergehenden Ansprüche,
**dadurch gekennzeichnet, dass** die Endlosschnur (10) ein Polyamid-ummanteltes Stahlseil ist.

5. Verwendung einer Endlosschnur (10) im Reitsport.

6. Verwendung einer Endlosschnur (10) gemäß einem der Ansprüche 1 bis 4 im Reitsport.

7. Verwendung einer Endlosschnur (10) nach Anspruch 5 oder 6 im Reitsport als Aufstieghilfe, wobei die Endlosschnur (10) quer über eine Trittfläche (22) eines Steigbügels (20) gelegt wird und zum Aufsteigen ein Fuß (30) in die beiderseits des Steigbügels (20) herabhängenden durch die Endlosschnur (10) gebildeten Schlaufen (10a, 10b) gestellt wird.

8. Verwendung einer Endlosschnur (10) nach Anspruch 5 oder 6 im Reitsport als Aufhängung für einen Salzleckstein (40) oder zum Transport von Zaun- oder Springstangen (41) oder Heuballen (42).

9. Verwendung einer Endlosschnur (10) nach Anspruch 5 oder 6 im Reitsport in einem Notgebiss für ein Pferd, wobei jeweils ein Karabinerhaken an jedem Ende der in sich verdrillten Endlosschnur (10) befestigt wird.

10. Verwendung einer Endlosschnur (10) nach Anspruch 5 oder 6 im Reitsport als Hebehilfe zum Aufheben eines Pferdehufs (50) .

11. Verwendung einer Endlosschnur (10) nach Anspruch 5 oder 6 im Reitsport als Balancezügel oder Einsteigerzügel.

12. Verwendung einer Endlosschnur (10) nach Anspruch 5 oder 6 im Reitsport als Schweißmesser.

13. Verwendung einer Endlosschnur (10) nach Anspruch 5 oder 6 im Reitsport als Schweifband oder Verlesehilfe.

14. Verwendung einer Endlosschnur (10) nach Anspruch 5 oder 6 im Reitsport zur Fixierung der Steigbügel (20) am Sattel (27) .

15. Verwendung einer Endlosschnur (10) nach Anspruch 5 oder 6 im Reitsport als Maria-Hilf-Riemen oder Festhalteriemen.

16. Verwendung einer Endlosschnur (10) nach Anspruch 5 oder 6 im Reitsport als Zügelfixierung

17. Verwendung einer Endlosschnur (10) nach Anspruch 5 oder 6 im Reitsport als Halsring oder Reitband.

18. Verwendung einer Endlosschnur (10) nach Anspruch 5 oder 6 im Reitsport als Führhilfe.

19. Verwendung einer Endlosschnur (10) nach Anspruch 5 oder 6 im Reitsport als Nothalfter.
